# EUROPEAN PATENT APPLICATION

(11) **EP 4 760 912 A1**
(43) Date of publication of application: **17.06.2026**
(21) Application number: 25212828.5
(22) Date of filing: 31.10.2025
(51) Int. Cl.: H01M 50/209, H01M 50/289, H01M 50/30, H01M 50/358, H01M 50/367

(54) **BATTERY MODULE**

(30) Priority: 11.12.2024 KR 20240183874
(71) Applicant: SAMSUNG SDI CO., LTD., Yongin-si, Gyeonggi-do 17084 (KR)
(72) Inventor: LEE, Choonghoon, 17084 Yongin-si (KR)
(74) Representative: Marks & Clerk LLP

(57) **Abstract**

A battery module includes a plurality of battery cells, each of which includes a vent and which are arranged in a first direction, spacers respectively positioned between the plurality of battery cells, a top plate spaced apart from the plurality of battery cells and covering a top of the plurality of battery cells, and side plates covering opposite side surfaces of the plurality of battery cells, in which each of the spacers includes an extension portion extending upwardly above the height of the battery cell, and the extension portion guides a venting gas discharge path of at least any one of the plurality of battery cells.

## Description

### BACKGROUND

### 1. Field

The present disclosure relates to a battery module.

### 2. Description of the Related Art

Secondary batteries are batteries that can be charged and discharged, unlike primary batteries that cannot be recharged. Low-capacity secondary batteries are used in small, portable electronic devices such as smartphones, feature phones, laptop computers, digital cameras, and camcorders, and high-capacity secondary batteries are widely used as motor-driving power sources, power-storing batteries, etc., for hybrid vehicles, electric vehicles, etc. Such a battery cell includes an electrode assembly including a positive electrode and a negative electrode, a case accommodating the electrode assembly, an electrode terminal connected to the electrode assembly, etc.

When battery cells are integrated to use a high-capacity battery, in case of fire, heat may spread to surrounding battery cells, causing a thermal runaway phenomenon and thus deteriorating the stability of a battery module.

The above-described information disclosed in the technology section that serves as the background of the present disclosure is only for improving the understanding of the background of the present disclosure, and thus may include information that does not constitute related art.

### SUMMARY

Embodiments provide a battery module with improved structural stability.

The problem that the present disclosure aims to solve is not limited to the problems mentioned above, and other problems and advantages of the present disclosure that are not mentioned can be understood through the following description and may be understood more clearly by the examples of the present disclosure. In addition, it will be appreciated that the problems and advantages to be solved by the present disclosure may be realized by means and combinations thereof indicated in the claims.

According to an aspect of the present disclosure, a battery module includes a plurality of battery cells, each of which includes a vent and which are arranged in a first direction, spacers respectively positioned between the plurality of battery cells, a top plate spaced apart from the plurality of battery cells and covering a top of the plurality of battery cells, and side plates covering opposite side surfaces of the plurality of battery cells, in which each of the spacers includes an extension portion extending upwardly above the height of the battery cell, and the extension portion guides a venting gas discharge path of at least any one of the plurality of battery cells.

In an embodiment, the discharge path may pass between the extension portion and at least any one of the side plates.

In an embodiment, the extension portion may further include at least one of a first region in which one end of the extension portion extends in a second direction that is perpendicular to the first direction and is parallel to a long side surface of a corresponding battery cell, and a second region in which another end of the extension portion extends in a direction opposite to the first region, and at least any one of the first region and the second region may come into contact with an adjacent side plate among the side plates.

In an embodiment, the spacers may be such that the first region and the second region alternately extend from the extension portion in the first direction.

In an embodiment, both the first region and the second region may come into contact with the adjacent side plates, the battery module may further include a first side extension portion connecting ends of first regions of two adjacent extension portions and a second side extension portion connecting ends of second regions, and the first side extension portion and the second side extension portion may be alternately arranged in the first direction.

In an embodiment, the side plates may include openings through which a venting gas is discharged, and the openings may be positioned at positions overlapping the side surfaces of the battery cells in the second direction perpendicular to the first direction.

In an embodiment, the battery module may be located outside of the side plate, the battery module may further include a cover portion covering the openings, the cover portion may extend in the first direction, and the discharge path may communicate between an outer surface of the side plate and the cover portion.

In an embodiment, the extension portion may come into contact with a bottom surface of the top plate.

In an embodiment, the top plate may include a plurality of openings respectively corresponding to the vents.

In an embodiment, the top plate may include a flow path therein connected to the plurality of openings.

In an embodiment, the extension portion may include the first region and the second region, and the first region and the second region may be bent in the first direction.

In an embodiment, the first region and the second region may be bent roundly in the first direction.

According to another aspect of the present disclosure, a battery module includes a plurality of battery cells, each of which includes a vent and which are arranged in a first direction, spacers respectively positioned between the plurality of battery cells, fixing guides into which one end of each of the spacers is inserted, a top plate spaced apart from the plurality of battery cells and covering a top of the plurality of battery cells, and side plates covering opposite side surfaces of the plurality of battery cells, in which each of the spacers includes an extension portion that guides a venting gas discharge path for at least one of the plurality of battery cells, and the extension portion extends upwardly above a height of the battery cell.

In an embodiment, the extension portion may further include at least any one of a first region in which one end of the extension portion extends in a second direction that is perpendicular to the first direction and is parallel to a long side surface of a corresponding battery cell, and a second region in which another end of the extension portion extends in a direction opposite to the first region.

In an embodiment, the extension portion may include the first region and the second region, and the first region and the second region may be bent in the first direction.

In an embodiment, the first region and the second region may be bent roundly in the first direction.

In an embodiment, the extension portion may be bent to cover the vent.

In an embodiment, the fixing guide may be located on at least any one of the side plates and the top plate.

In an embodiment, the top plate may include a plurality of openings respectively corresponding to the vents.

In an embodiment, the top plate may include a flow path therein connected to the plurality of openings.

At least some of the above and other features of the invention are set out in the claims.

Other aspects, features, advantages, and advantages other than those described above will become apparent from the following figures, claims, and the detailed description of the present disclosure.

### BRIEF DESCRIPTION OF THE DRAWINGS

FIG. 1 is a perspective view schematically showing an example of a battery module according to an embodiment, in which:
FIG. 2 is a perspective view schematically showing a unit battery cell, which is an example of a unit cell of the battery module of FIG. 1;
FIG. 3 is a cross-sectional view schematically showing an example of an electrode assembly of the unit battery cell of FIG. 2;
FIG. 4 is a view schematically showing an example of an inside of the battery module of FIG. 1;
FIGS. 5 to 7 are plan views schematically showing an example of the battery module of FIG. 1;
FIG. 8 is a perspective view schematically showing another example of a battery module according to an embodiment;
FIG. 9 is a view schematically showing an example of an inside of the battery module of FIG. 8;
FIG. 10 is a perspective view schematically showing another example of a battery module according to an embodiment;
FIGS. 11 and 12 are plan views schematically showing another example of the battery module of FIG. 1;
FIGS. 13 and 14 are views schematically showing another example of the battery module of FIG. 1;
FIGS. 15 and 16 are plan views schematically showing another example of the battery module of FIG. 1; and
FIG. 17 is a cross-sectional view schematically showing an example of a spacer.

### DETAILED DESCRIPTION

The present disclosure may have various modifications thereto and various embodiments, and thus particular embodiments will be illustrated in the drawings and described in detail in a detailed description. It should be understood, however, that this is not intended to limit the present disclosure to a particular embodiment of the present disclosure, and should be understood to include all changes, equivalents, and alternatives falling within the scope of the present disclosure. In describing the present disclosure, if it is determined that a detailed description of related known technologies may obscure the gist of the present disclosure, the detailed description thereof will be omitted.

Terms such as first, second, and the like may be used to describe various elements, but the elements should not be limited to those terms. These terms may be used to distinguish one element from another element.

The term used herein is used to describe particular embodiments, and is not intended to limit the disclosure. Singular forms may include plural forms unless apparently indicated otherwise contextually. In each drawing, components are exaggerated, omitted, or schematically illustrated for convenience and clarity of a description, and the size of each component does not entirely reflect the actual size.

In the description of each component, when it is described as being formed on or under, on and under include both those formed directly or with another component therebetween, and criteria for on and under are described based on the drawings.

Hereinafter, embodiments of the present disclosure will be described in detail with reference to the accompanying drawings, and in description with reference to the drawings, the same or corresponding components are given the same reference numerals, and redundant description thereto will be omitted.

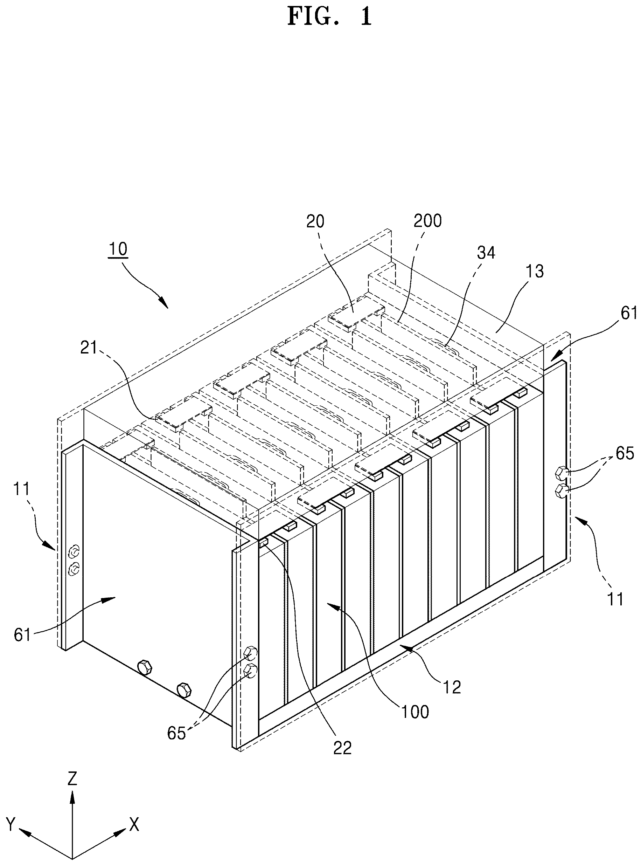

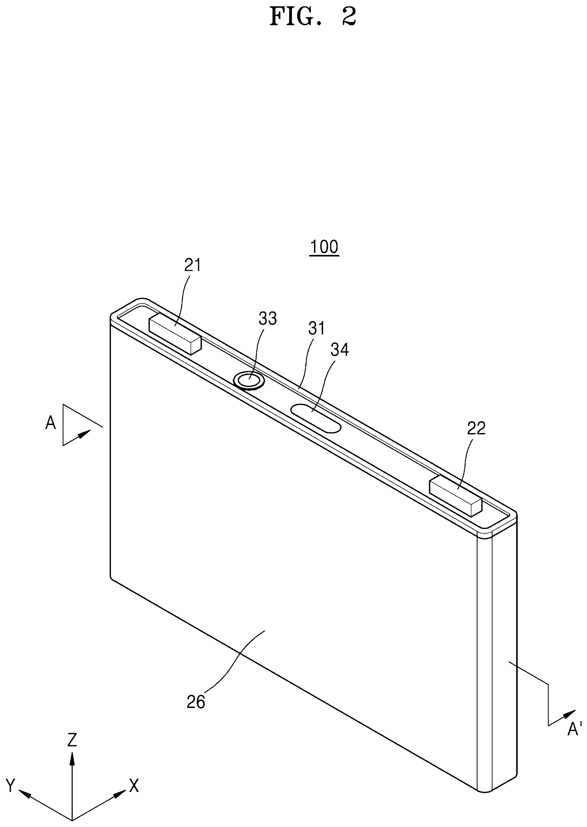

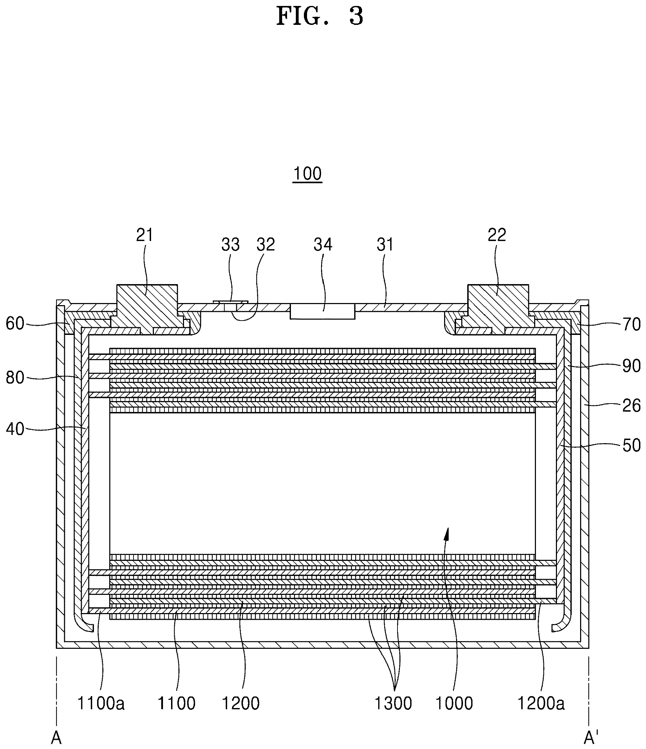

FIG. 1 is a perspective view schematically showing an example of a battery module 10 according to an embodiment, FIG. 2 is a perspective view schematically showing a unit battery cell 100, which is an example of a unit cell of the battery module 10 of FIG. 1, and FIG. 3 is a cross-sectional view schematically showing an example of an electrode assembly 1000 of the unit battery cell 100 of FIG. 2.

Referring to FIGS. 1 to 3, the battery module 10 may include a plurality of battery cells 100 each including a vent 34 and arranged in a first direction x, spacers 200 respectively arranged between the plurality of battery cells 100, a top plate 13 spaced apart from the plurality of battery cells 100 and covering a top of the plurality of battery cells 100, and side plates 11 respectively covering opposite side surfaces of the plurality of battery cells 100.

First, the battery module 10 according to the present disclosure may include electrode terminals 21, 22 and may include the plurality of battery cells 100 arranged in a direction x and a bus bar 20 connecting the battery cell 100 to another battery cell 100 adjacent thereto.

The battery cell 100 may include a battery case e.g. can 26, an electrode assembly 1000 accommodated in the battery case, and an electrolyte. The electrode assembly 1000 and the electrolyte may electrochemically react with each other to generate electricity. A side (e.g. top surface) of the battery cell 100 may be provided with the electrode terminals 21, 22 electrically connected to the bus bar 20. While serial connection is shown in FIG. 1, the present disclosure is not limited to such a structure and various connection structures may be adopted as needed. The number and arrangement of battery cells 10 are not limited to the structure shown in FIG. 1 and may be changed as needed.

The battery module 10 may include the top plate 13 to protect the top surface of the battery cell 100.

The plurality of battery cells 100 may be arranged in a direction x such that wide surfaces (e.g. side surfaces) of the battery cells 100 face each other, and the arranged plurality of battery cells 100 may be fixed by a housing . The housing may include the top plate 13, a pair of end plates 61 facing the wide surfaces (e.g. side surfaces) of the battery cells 100, side plates 11 and a bottom plate 12 connecting the pair of end plates 61. The side plate 11 may support the side surface of the battery cell 10, and the bottom plate 12 may support a bottom surface of the battery cell 10. The pair of end plates 61, the side plates 11, and the bottom plate 12 may be connected by a member such as a bolt 65, etc.

The connection may be made by any one of soldering, resistance welding, laser welding, or projection welding.

The battery cell 100 according to an embodiment may be described as a lithium ion secondary battery of a prismatic type as an example. However, the present disclosure is not limited thereto, and the present disclosure may be applied to various types of batteries such as lithium polymer batteries or cylindrical batteries.

The can 26 may form the overall appearance of the battery cell 100 and may be formed of a conductive metal such as aluminum, an aluminum alloy, or nickel-plated steel. The can 26 may provide a space in which the electrode assembly 1000 is accommodated.

The battery cell 100 may include a cap plate 31 covering a surface of the can 26, and the can 26 and the cap plate 31 may be made of a conductive material. The positive and negative terminals 21, 22 electrically connected to the positive electrode or the negative electrode may be installed to protrude outwardly through the cap plate 31.

Outer circumferential surfaces of upper pillars of the positive and negative terminals 21, 22 protruding outward from the cap plate 31 may be threaded and fixed to the cap plate 31 with a nut.

However, the present disclosure is not limited thereto, and the positive and negative terminals 21, 22 may be formed as a rivet structure and may be riveted or may be welded to the cap plate 31.

The cap plate 31 may be formed as a thin plate and may be coupled to a surface of the can 26.

As shown in FIG. 3, the battery cell 100 according to an embodiment may include the can 26 in which the electrode assembly 1000 is housed, the cap plate 31 coupled to an opening of the can 26, and an electrolyte inlet 32 sealed with a sealing plug 33.

As shown in FIG. 3, the battery cell 100 according to an embodiment may include at least one electrode assembly 1000 wound with a separator 1300 as an insulator between a positive electrode 1100 and a negative electrode 1200, the can 26 in which the electrode assembly 1000 is housed, and the cap plate 31 coupled to the opening of the can 26.

The battery cell 100 according to an embodiment may be described as a lithium ion secondary battery of a prismatic type as an example. However, the present disclosure is not limited thereto, and the present disclosure may be applied to various types of batteries such as lithium polymer batteries or cylindrical batteries.

The positive electrode 1100 and the negative electrode 1200 may include coated portions which are regions where an active material is applied to a current collector formed of a metal foil of a thin plate, and non-coated portions 1100a and 1200a which are regions where the active material is not coated.

The positive electrode 1100 and the negative electrode 1200 may be wound with the separator 1300, which is an insulator, arranged therebetween. However, the present disclosure is not limited thereto, and the electrode assembly 1000 may be formed in a structure where a positive electrode and a negative electrode made of a plurality of sheets are alternately laminated with a separator therebetween.

An insulating member may be installed between the electrode assembly 1000 and the cap plate 31. The insulating member may include first and second lower insulating members 60, 70, and each of the first and second lower insulating members 60, 70 may be installed between the electrode assembly 1000 and the cap plate 31.

According to an embodiment, one end of a separating member installed facing a side surface of the electrode assembly 1000 may be installed between the insulating member and the positive or negative terminals 21 or 22.

The separating member may include first and second separating members 80, 90.

Thus, ends of the first and second separating members 80, 90 installed facing a side surface of the electrode assembly 1000 may be installed between the first and second lower insulating members 60, 70 and the positive and electrode terminals 21, 22.

The positive and negative terminals 21, 22 welded to positive and negative current collectors 40, 50 may be coupled to the first and second lower insulating members 60, 70 and the ends of the first and second separating members 80, 90.

Each of the battery cells 100 may include the vent 34 that is a path for discharging venting gas generated internally. The vent 34 may be installed in the same direction y as the electrode terminals 21, 22 of the battery cell 100.

The vent 34 may be formed thinner than other parts of the cap plate 31 or may include a notch such that the vent 34 may be first affected by the pressure of gas coming from inside the battery cell 100 and the venting gas may be discharged through the vent 34.

The battery module 10 may include the spacer 200 capable of insulating the battery cells 100 from each other and absorbing shock between the battery cells 100. The spacer 200 may be placed between the battery cells 100 and have a thickness equal to a distance between the battery cells 100.

The spacer 200 may be made of a compressible material such that even in case of swelling in the battery cell 100, the spacer 200 may protect the battery cell 100 without being damaged.

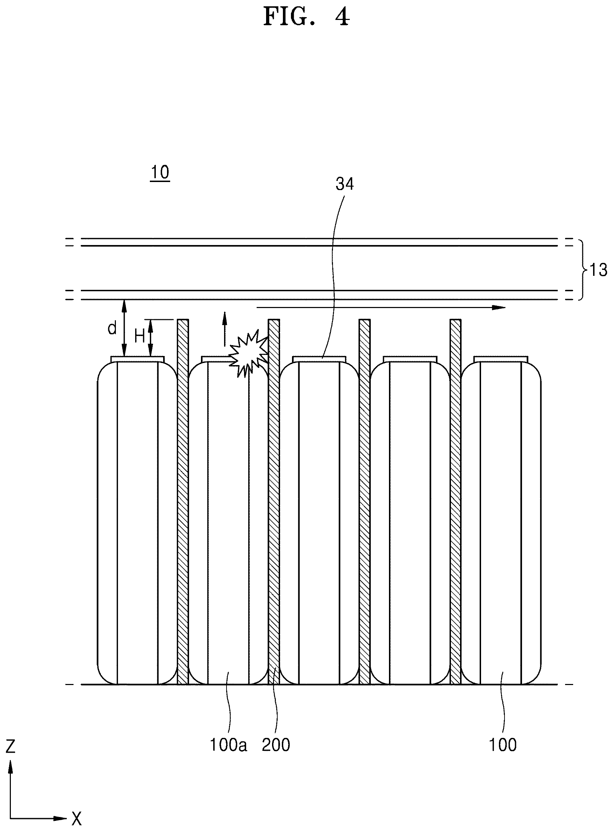

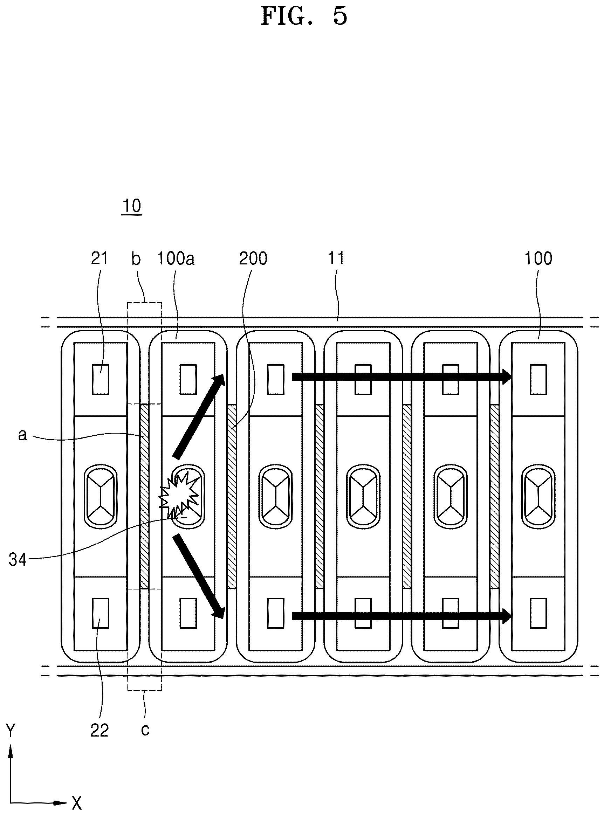

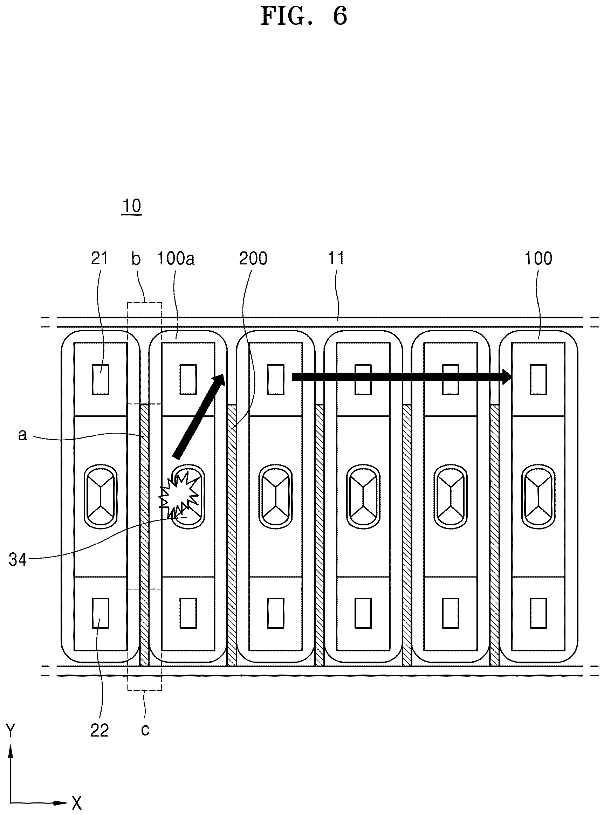

FIGS. 4 to 7 are plan views schematically showing an example of the battery module of FIG. 1.

Referring to FIGS. 4 to 7, each of the spacers 200 may include an extension portion a that extends upwardly above the height of the battery cell 100, and the extension portion a may extend in a third direction z, which is a height direction of the battery cell 100, by an extension portion length H, and may guide a venting gas discharge path of at least any one of the plurality of battery cells 100.

The venting gas may be discharged from an event battery cell 100a, and the venting gas may be guided in a direction in which the extension portion a is not formed.

To allow the venting gas to move easily, a sufficient separation distance d needs to be secured between the top plate 13 and the battery cell 100.

For example, the separation distance d between the top plate 13 and the top of the battery cell 100 may be about 15 mm to about 25 mm.

When the separation distance d between the top plate 13 and the battery cell 100 is less than about 15 mm, a space for allowing the venting gas to sufficiently move may not be secured and ash or gas generated by the fire may remain in a specific space, making heat propagation easily occur.

When the separation distance d exceeds about 25 mm, a space required for the battery module 10 becomes larger, making it difficult to configure a compact battery module 10, and the vent 34 of the event battery cell 100a may be affected by another adjacent vent 34.

An end of the extension portion a may extend to a first region c that extends in a second direction y that is perpendicular to the first direction x and is parallel to a long side surface of a corresponding battery cell 100.

For example, the first region c may prevent the venting gas from flowing toward the first region c by having one end that contacts the side plate 11 meeting an extension direction of the first region c and blocking movement of the venting gas through the first region c.

The other end of the extension portion a may further extend to at least any one of the first region c and a second region b extending in the opposite direction.

For example, when the first region c extends toward one side electrode terminal 21, the second region b may extend toward the other side electrode terminal 22 and toward the adjacent side plate 11, thereby blocking a venting gas flow on a side of the battery cell 100 and thus guiding the venting gas to flow toward the other side of the battery cell 100.

In conclusion, the extension portion a may further include at least any one of the first region c in which one end of the extension portion a extends in the second direction y that is perpendicular to the first direction x and parallel to the long side surface of the battery cell 100 and the second region b in which the other end of the extension portion a extends in the opposite direction, and at least any one of the first region c and the second region b may come into contact with the adjacent side plate 11 among the side plates 11.

Thus, the discharge path may pass between the extension portion a and at least any one of the side plates 11.

To configure a longer discharge path, the extension portions a and the extended first regions c or second regions b of the adjacent spacers 200 may be alternately arranged on the different side plates 11.

In some embodiments, in the spacers 200, the first regions c and the second regions b may alternately extend from the extension portions a in the first direction x.

When a side of the spacer 200 extends to the first region c to come into contact with the side plate 11, the other spacer 200 may extend to the second region b to come into contact with a side plate 11' on the other side.

In this way, the discharge path may be extended and a sufficient distance for the heated venting gas to cool, thereby preventing heating of the venting gas and heat propagation through the ash.

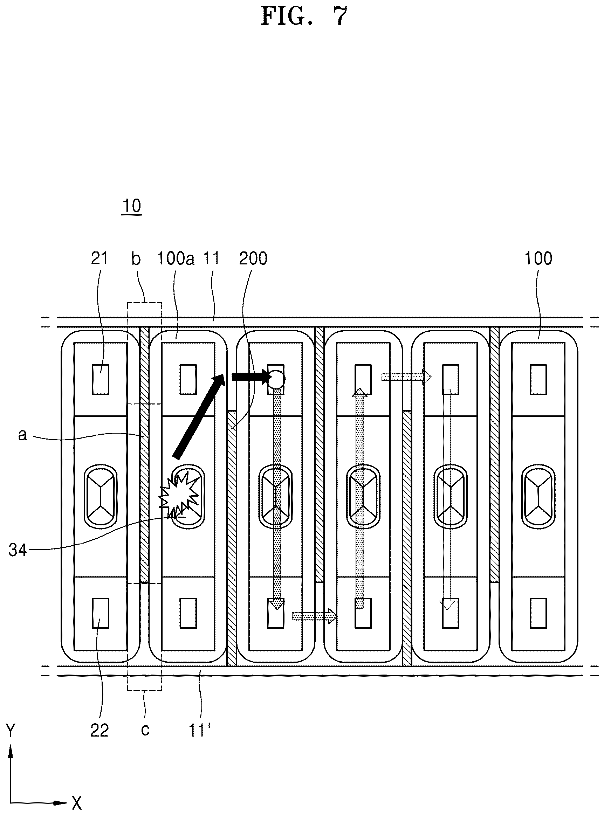

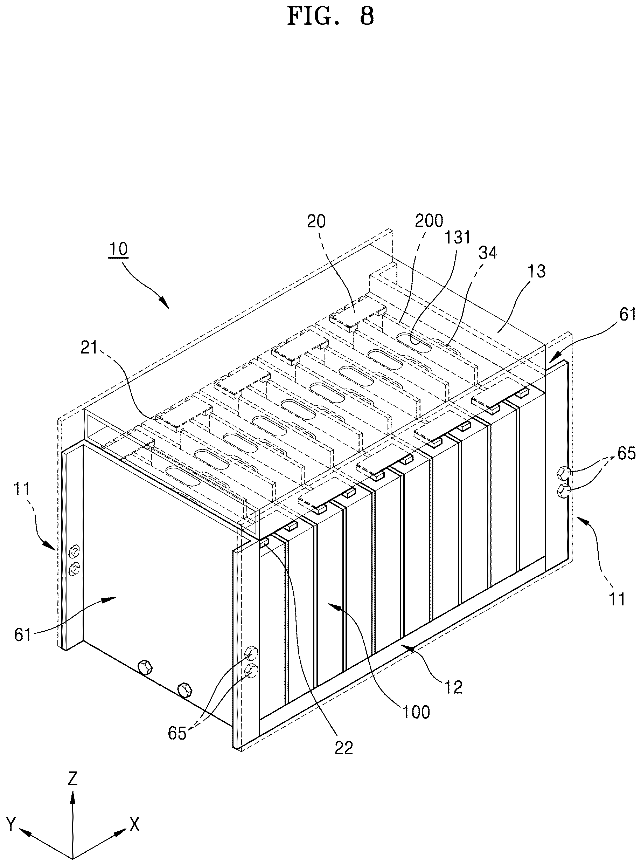

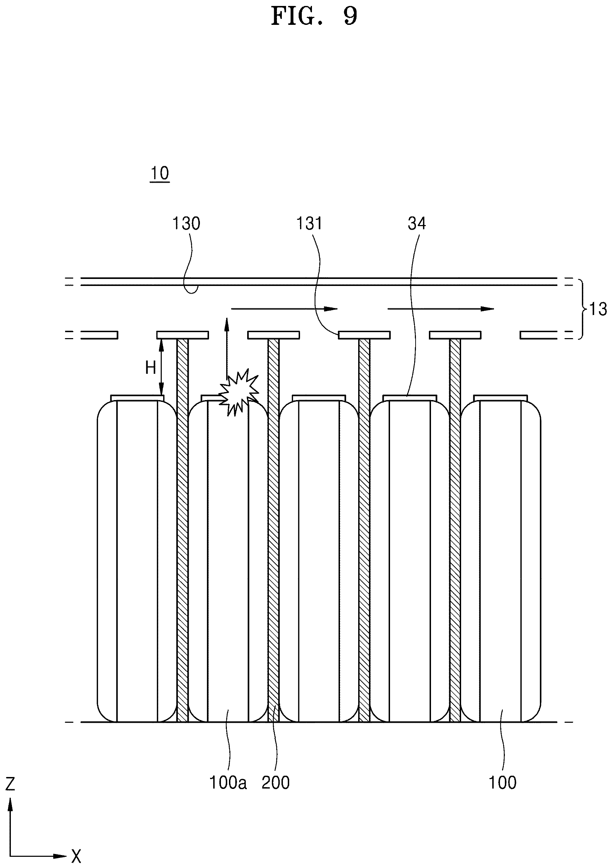

FIG. 8 is a perspective view schematically showing another example of a battery module 10 according to an embodiment, and FIG. 9 is a view schematically showing an example of an inside of the battery module 10 of FIG. 7.

Referring to FIGS. 8 and 9, the top plate 13 may include a plurality of top openings 131 respectively corresponding to the vents 34.

The plurality of top openings 131 may respectively correspond to the vents 34 and may be arranged as many as the number of vents 34. The size of the top opening 131 may be greater than that of the vent 34.

The top plate 13 may include a flow path 130 inside connected to the plurality of top openings 131.

The top plate 13 may be hollow and may be connected to the top surface of the battery cell 100 through the top opening 131.

The top plate 13 may be formed such that at least one surface perpendicular to the first direction x is open and the venting gas may be discharged to outside by flowing through the open surface.

For example, the venting gas introduced through the top opening 131 may flow toward the open surface to form the flow path 130.

The extension portion length H may be formed to come into contact with the bottom surface of the top plate 13.

When the vent 34 is damaged due to thermal runaway of the event battery cell 100a and thus the venting gas is generated and discharged to outside of the event battery cell 100a, the extension portion length H may come into contact with the bottom surface of the top plate 13 to prevent the venting gas from contacting the other battery cells 100.

The vent 34 may be configured to correspond to the top opening 131 to make the venting gas to easily flow to the top opening 131 when the venting gas is generated, and the extension portion length H may include at least any one of the extension portion a, the first region c, and the second region b, and the discharge path may be guided through the extension direction of the extension portion length H and the arrangement of the extension portion a.

For example, to allow the venting gas of the event battery cell 100a to smoothly flow into the flow path 130 of the top plate 13, the extension portion length H may be formed to include the extension portion a, the first region c, and the second region b such that the discharge path may run directly toward the top plate 13.

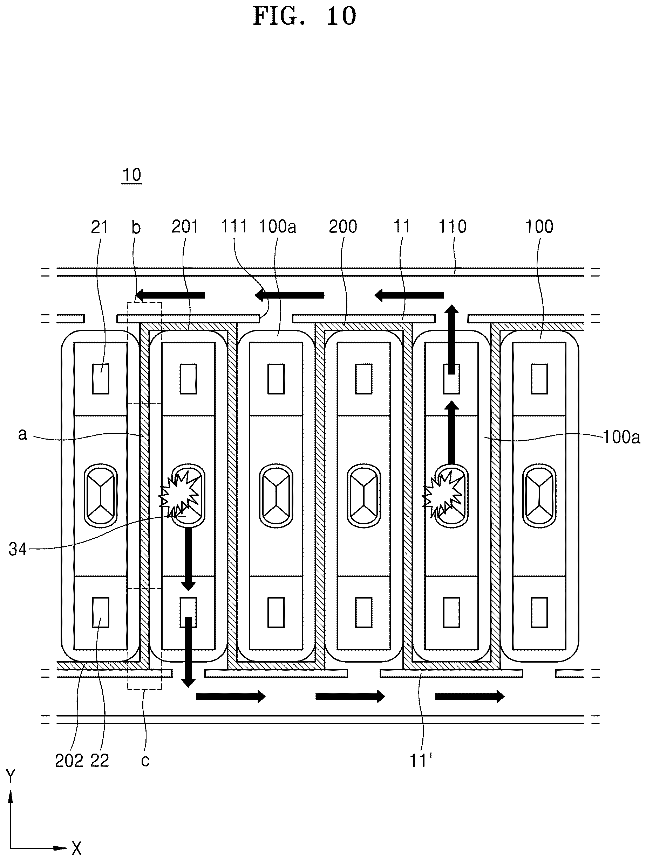

FIG. 10 is a perspective view schematically showing another example of a battery module 10 according to an embodiment.

As shown in FIG. 10, both the first region c and the second region b may come into contact with the adjacent side plates 11, 11', and the battery module 10 may further include a first side extension portion 201 connecting ends of the first regions c of the two adjacent extension portions a and a second side extension portion 202 connecting ends of the second regions b, and the first side extension portion 201 and the second side extension portion 202 may be alternately arranged in the first direction.

In addition, the side plates 11, 11' may include side openings 111 through which the venting gas is discharged, and the side openings 111 may be respectively positioned at positions overlapping the side surfaces of the battery cells 100 in the second direction y perpendicular to the first direction x.

The battery module 10 may further include a cover portion 110 positioned outside the side plate 11 and covering the side openings 111, and the cover portion 110 may extend in the first direction x, and the discharge path may communicate between an outer surface of the side plate 11 and the cover portion 110.

The battery module 10 according to an embodiment may further include the side opening 111 in the side plate 11 and side extension portions 201 and 202 for guiding venting gas to the side opening 111.

The adjacent side extension portions 201, 202 may be provided on different side plates 11, 11' and may be provided on the side surface of the side opening 111.

The side extension portions 201, 202 may formed between the first regions c or between the second regions b and may be formed on the side surfaces of the battery cells 100.

In this way, the side extension portions 201, 202 may guide the discharge path of venting gas toward the side opening 111 when thermal runaway occurs in the event battery cell 100a.

The cover portion 110 may be provided spaced apart from the side plates 11, 11' on one side surface or opposite side surfaces of the battery module 10, and an open surface may be formed on one side surface of the cover portion 110 to form a venting gas discharge path.

The venting gas may be introduced to the side opening 111, move and may be introduced to the cover portion 110, and thus may be discharged to minimize flow of the venting gas over the battery cell 100, thereby preventing heat propagation to the other battery cells 100 adjacent to the event battery cell 100a.

For example, the side plate 11 of the surface on which the cover portion 110 is provided may include the side opening 111 formed therein. An area of the side opening 111 may be arbitrarily determined along the width of the battery cell 100 and the venting gas discharge path.

For example, one surface provided with the cover portion 110 may include a first side extension portion 201, and the other surface not provided with the cover portion 110 may not include a second side extension portion 202, thereby saving space and material.

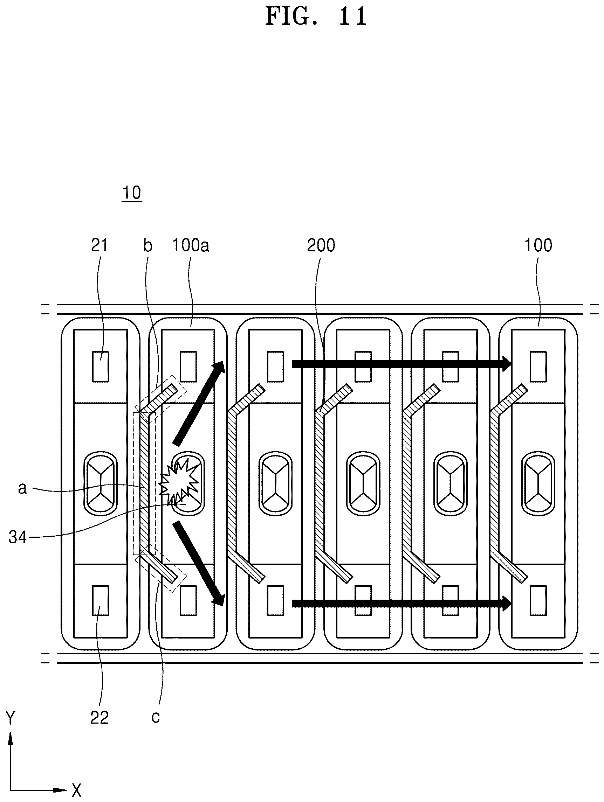

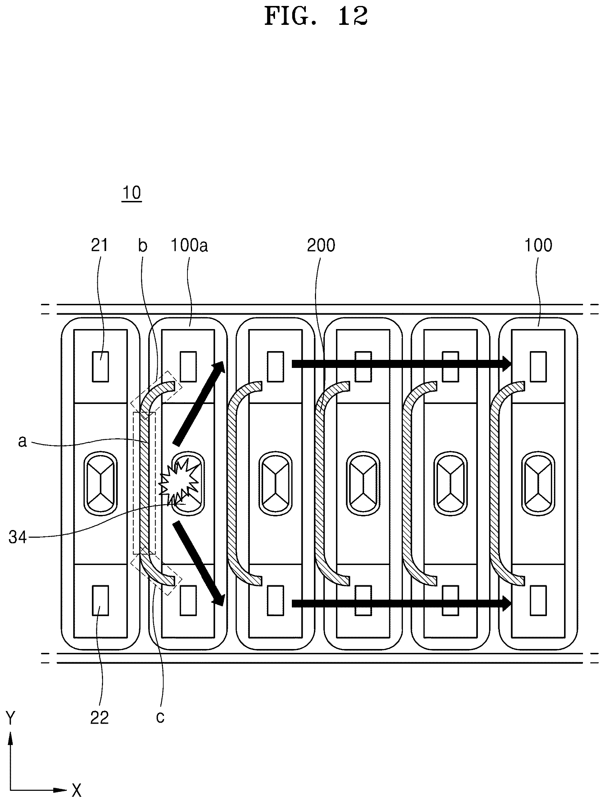

FIGS. 11 and 12 are plan views schematically showing another example of the battery module of FIG. 1.

Referring to FIGS. 11 and 12, the extension portion a may include the first region c and the second region b, and the first region c and the second region b may be bent in the first direction x.

The extension portion a may include the first region c and the second region b that are bent to allow the venting gas to easily flow through the discharge path. The first region c and the second region b may be bent angularly to guide the venting gas discharged from the event battery cell 100a.

The first region c and the second region b may be bent roundly in the first direction x.

When the first region c and the second region b are bent angularly, vortex flow of the venting gas occurs near the corner of an angular portion, which slows down the flow rate of the venting gas or causes the venting gas to flow in the opposite direction of the guided discharge path.

To solve this point, the first region c and the second region b may extend and be bent roundly in the first direction x.

In this way, the venting gas may be discharged more easily through the discharge path guided to the spacer 200.

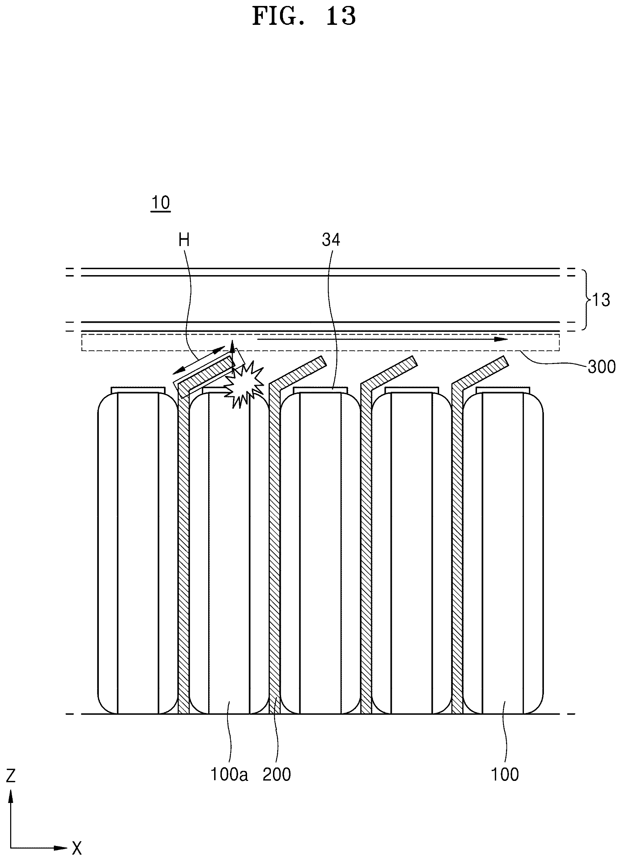

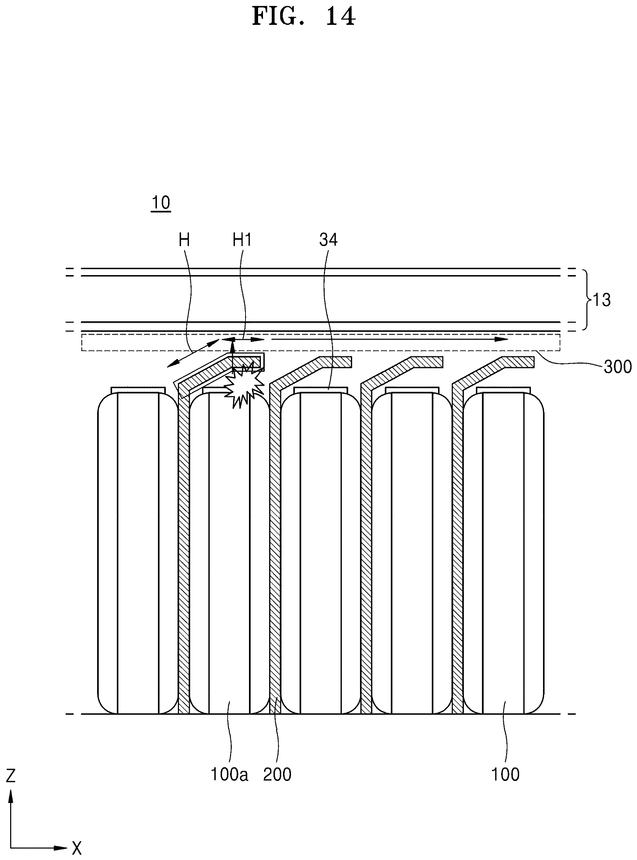

FIGS. 13 and 14 are views schematically showing another example of the battery module of FIG. 1.

Referring to FIGS. 13 and 14, to prevent a sudden impact due to the venting gas in case of explosion of the vent 34, the extension portion length H may have the extension portion length H that is bent toward the vent 34 and may correspond to the top surface of the vent 34.

The bent extension portion length H may be stretched toward the top plate 13 by moving the end in a third direction z under a force in the direction of explosion of the vent 34 when the event battery cell 100a explodes.

By covering a top of the vent 34 with the bent extension portion length H, the vent 34 of the battery cells 100 that are not subjected to heat propagation may be protected from the venting gas or ash.

For example, the venting gas may be guided to a battery top portion 300. When thermal runaway occurs in the event battery cell 100a, the bent extension portion length H may move in the third direction z to smoothly discharge the venting gas of the event battery cell 100a toward the battery top portion 300 and block the other vents 34, thereby allowing the venting gas to flow to a space for the battery top portion 300 of the other battery cells 100.

The end of the bent extension portion length H may include an additional extension portion H1 extending once more, and the additional extension portion H1 may be bent in the direction of the vent 34.

As the extension portion length H bent once may be easily lifted or damaged depending on the degree of bending, the additional extension portion H1 may be included and bent once more toward the vent 34 to more completely cover the vent 34.

In this way, the venting gas of the event battery cell 100a may be prevented from coming into contact with the vent 34, thereby blocking heat propagation between the battery cells 100.

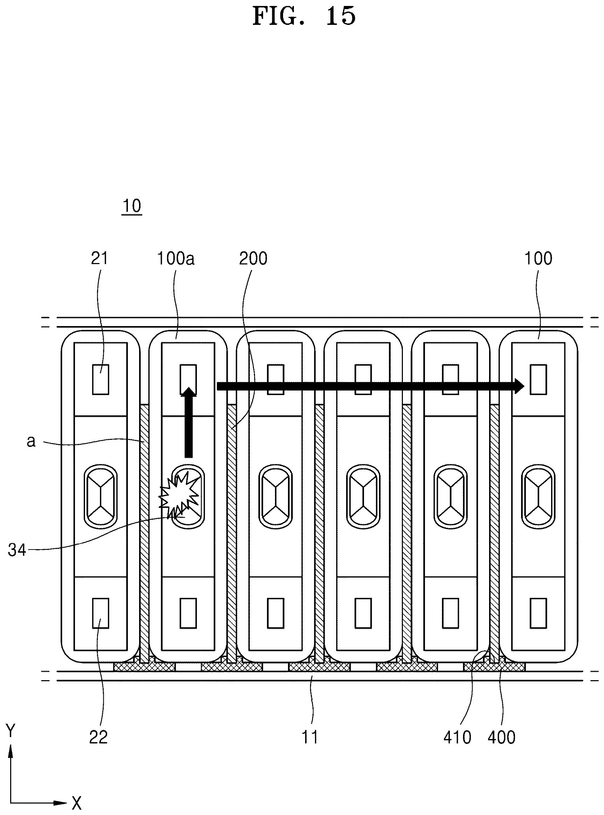

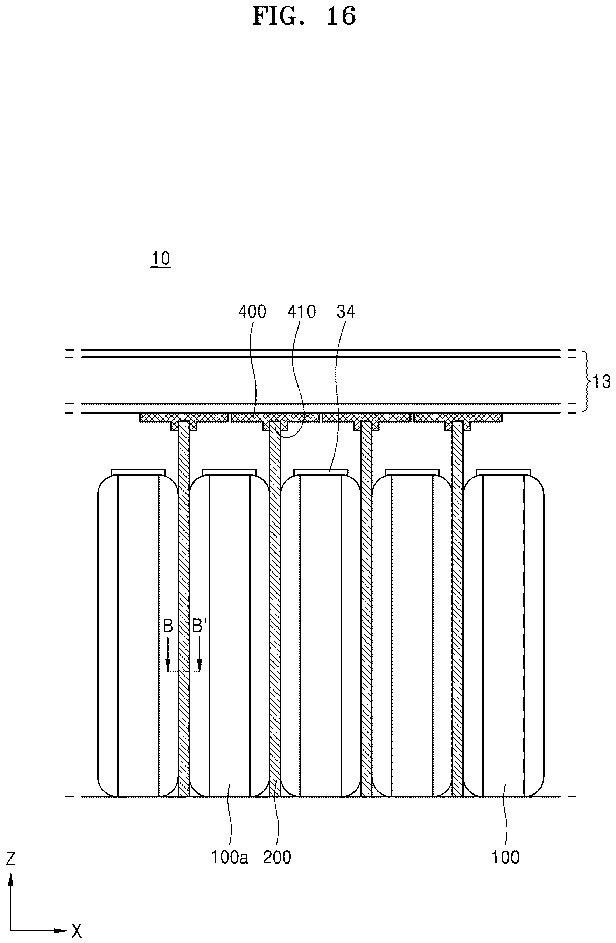

FIGS. 15 and 16 are plan views schematically showing another example of the battery module of FIG. 1.

Referring to FIGS. 15 and 16, the battery module 10 may include a fixing guide 400 for fixing one end of the spacer 200.

The fixing guide 400 may include a fixing groove 410 into which one end of the spacer 200 is inserted.

As the can 26 of FIG. 2 of the battery cell 100 is formed of a metal material, the can may have a low surface friction and a smooth outer surface, such that the spacer 200 attached therebetween may shake without being smoothly fixed or move out of place.

To prevent this problem, the fixing groove 410 may be provided on a surface of the fixing guide 400 having a rod shape, and one end of the spacer 200 may be inserted into the fixing groove 410 to fix the position of the spacer 200.

The fixing guide 400 may be positioned on at least any one of the side plates 11 and the top plate 13.

An opposite surface to the surface of the fixing guide 400 including the fixing groove 410 may be attached and fixed to at least any one of an inner surface of one of the side plates 11 and an inner surface of the top plate 13.

Thus, after the spacer 200 is inserted into the fixing groove 410, the opposite side of the fixing groove 410 may be attached and fixed to the side plate 11 or the top plate 13 to fix the fixing guide 400.

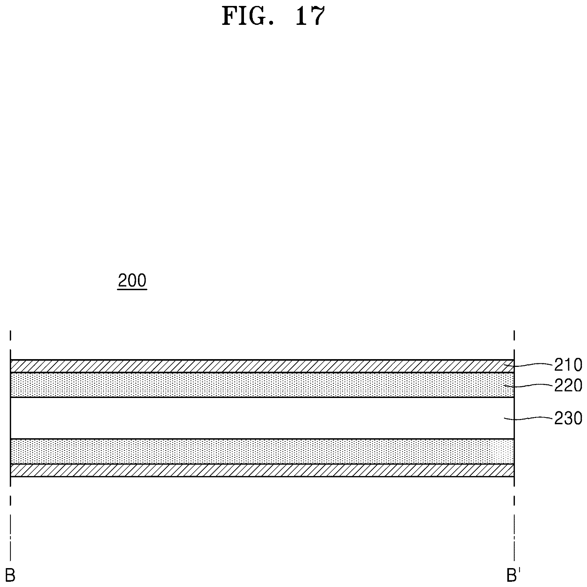

FIG. 17 is a cross-sectional view schematically showing an example of a spacer. For example, FIG 17 is a cross-sectional view taken along a line B-B' in FIG 16.

Referring to FIG. 17, the spacer 200 may be made of a material that is insulating and heat-insulating and has excellent compressibility. For example, the spacer 200 may include an adhesive member 210, a mica 220, and an aerogel 230. The spacer 200 may have a thickness of about 20 mm to about 30 mm.

For example, the adhesive member 210 may be a double-sided tape. This may facilitate adhesion between battery cells.

The aerogel 230 may be heat-insulating and insulating and compressible. When the aerogel 230 is arranged between the battery cells, it may be difficult to maintain the extension shape of the spacer 200 due to insufficient rigidity.

To solve this problem, a structural reinforcement material may be attached to opposite side surfaces of the aerogel 230. As described above, a material that is relatively harder than the aerogel 230, such as the mica 220, may be provided on the opposite side surfaces of the aerogel 230 to supplement the rigidity.

When the spacer 200 is less than about 20 mm, the spacer 200 may be too thin to cushion impact between the battery cells 100 and to protect the battery cells 100 when swelling occurs due to overcharge and overload of the battery cells 100, and when the spacer 200 exceeds about 30 mm, the spacer 200 may occupy too much space, making it difficult to make a compact battery module.

The battery module according to the present disclosure may improve stability by delaying propagation of flames, etc., to adjacent battery cells even when thermal runaway occurs in any one battery cell.

Embodiments are set out in the following clauses.

Clause 1. A battery module comprising: a plurality of battery cells, each of which comprises a vent and which are arranged in a first direction; spacers respectively positioned between the plurality of battery cells; a top plate spaced apart from the plurality of battery cells and covering a top of the plurality of battery cells; and side plates covering opposite side surfaces of the plurality of battery cells, wherein each of the spacers comprises an extension portion extending upwardly above the height of the plurality of battery cells, and the extension portion guides a venting gas discharge path of at least any one of the plurality of battery cells.

Clause 2. The battery module of Clause 1, wherein the venting gas discharge path passes between the extension portion and at least any one of the side plates.

Clause 3. The battery module of Clause 2, wherein the extension portion comprises at least one of a first region in which one end of the extension portion extends in a second direction that is perpendicular to the first direction and is parallel to a long side surface of a corresponding battery cell, and a second region in which another end of the extension portion extends in a direction opposite to the first region, and at least any one of the first region and the second region comes into contact with an adjacent side plate among the side plates.

Clause 4. The battery module of Clause 3, wherein the spacers are such that the first region and the second region alternately extend from the extension portion in the first direction.

Clause 5. The battery module of Clause 3, wherein both the first region and the second region come into contact with the adjacent side plates, the battery module further comprises a first side extension portion connecting ends of two adjacent first regions and a second side extension portion connecting ends of two adjacent second regions, and the first side extension portion and the second side extension portion are alternately arranged in the first direction.

Clause 6. The battery module of Clause 5, wherein the side plates comprise openings through which a venting gas is discharged, and the openings are positioned at positions overlapping the side surfaces of the battery cells in the second direction perpendicular to the first direction.

Clause 7. The battery module of Clause 6, wherein the battery module further comprises a cover portion located outside of the side plates and covering the openings, the cover portion extends in the first direction, and the venting gas discharge path communicates between an outer surface of the side plates and the cover portion.

Clause 8. The battery module of Clause 7, wherein the extension portion comes into contact with a bottom surface of the top plate.

Clause 9. The battery module of Clause 1, wherein the top plate comprises a plurality of openings respectively corresponding to the vents.

Clause 10. The battery module of Clause 9, wherein the top plate comprises a flow path therein connected to the plurality of openings.

Clause 11. The battery module of Clause 1, wherein the extension portion comprises the first region and the second region, and the first region and the second region are each bent in the first direction.

Clause 12. The battery module of Clause 11, wherein the first region and the second region are bent roundly in the first direction.

Clause 13. A battery module comprising: a plurality of battery cells, each of which comprises a vent and which are arranged in a first direction; spacers respectively positioned between the plurality of battery cells; fixing guides into which one end of each of the spacers is inserted; a top plate spaced apart from the plurality of battery cells and covering a top of the plurality of battery cells; and side plates covering opposite side surfaces of the plurality of battery cells, wherein each of the spacers comprises an extension portion that guides a venting gas discharge path for at least one of the plurality of battery cells, and the extension portion extends upwardly above a height of the battery cell.

Clause 14. The battery module of Clause 13, wherein the extension portion is bent to cover the vent.

Clause 15. The battery module of Clause 14, wherein the fixing guide is located on at least any one of the side plates and the top plate.

Although the present disclosure has been described with reference to an example shown in the drawings, it will be understood by those of ordinary skill in the art that various modifications and equivalent other examples may be made from the shown example. Accordingly, the true technical scope of the present disclosure should be defined by the scope of the appended claims.

## Claims

1. A battery module comprising:
a plurality of battery cells which are arranged in a first direction, each of the battery cells comprising a vent;
spacers respectively positioned between the plurality of battery cells;
a top plate spaced apart from the plurality of battery cells and covering a top of the plurality of battery cells; and
side plates covering opposite side surfaces of the plurality of battery cells,
wherein each of the spacers comprises an extension portion extending upwardly above the height of the plurality of battery cells, and
the extension portion is configured to guide a venting gas discharge path of at least any one of the plurality of battery cells.

2. The battery module of claim 1, wherein the venting gas discharge path passes between the extension portion and at least any one of the side plates.

3. The battery module of claim 1 or 2, wherein the extension portion comprises at least one of a first region in which one end of the extension portion extends in a second direction that is perpendicular to the first direction and is parallel to a long side surface of a corresponding battery cell, and a second region in which another end of the extension portion extends in a direction opposite to the first region, and
at least any one of the first region and the second region comes into contact with an adjacent side plate among the side plates.

4. The battery module of claim 3, wherein the spacers are such that the first region and the second region alternately extend from the extension portion in the first direction.

5. The battery module of claim 3 or 4, wherein both the first region and the second region come into contact with the adjacent side plates,
the battery module further comprises a first side extension portion connecting ends of two adjacent first regions and a second side extension portion connecting ends of two adjacent second regions, and
the first side extension portion and the second side extension portion are alternately arranged in the first direction.

6. The battery module of claim 5, wherein the side plates comprise openings through which a venting gas is discharged, and
the openings are positioned at positions overlapping the side surfaces of the battery cells in a second direction perpendicular to the first direction.

7. The battery module of claim 6, wherein the battery module further comprises a cover portion located outside of the side plates and covering the openings,
the cover portion extends in the first direction, and
the venting gas discharge path communicates between an outer surface of the side plates and the cover portion.

8. The battery module of claim 7, wherein the extension portion comes into contact with a bottom surface of the top plate.

9. The battery module of claim 1, wherein the top plate comprises a plurality of openings respectively corresponding to the vents.

10. The battery module of claim 9, wherein the top plate comprises a flow path therein connected to the plurality of openings of the top plate.

11. The battery module of claim 1, wherein the extension portion comprises a first region and a second region, and
the first region and the second region are each bent in the first direction.

12. The battery module of claim 11, wherein the first region and the second region are bent roundly in the first direction.

13. The battery module of any preceding claim comprising:
fixing guides into which one end of each of the spacers is inserted.

14. The battery module of claim 13, wherein the extension portion is bent to cover the vent.

15. The battery module of claim 13 or 14, wherein the fixing guides are located on at least any one of the side plates and the top plate.
